# EUROPEAN PATENT APPLICATION

(11) **EP 0 758 814 A1**
(43) Date of publication of application: **19.02.1997**
(21) Application number: 95309342.4
(22) Date of filing: 21.12.1995
(51) Int. Cl.: H02K 37/20

(54) **Hybrid stepping motor**

(30) Priority: 16.08.1995 JP 208879/95; 16.08.1995 JP 208880/95
(71) Applicant: TAMAGAWA SEIKI KABUSHIKI KAISHA, Iida-shi, Nagano-ken (JP)
(72) Inventor: Sugiura, Tsuneo, Iida-shi, Nagano-ken (JP)
(74) Representative: Suckling, Andrew Michael

(57) **Abstract**

A hybrid stepping motor comprises a pair of bearings (2,3) mounted on a fixed shaft (1), a rotor case (4) rotatably supported on the bearings, a rotor yoke (6) disposed in the inner surface of the rotor case and having a plurality of teeth (7), first and second stator yokes (9,10) mounted on the fixed shaft (1) with a magnet plate (8) therebetween, a plurality of teeth (9a,10a) formed on the outer circumference of each stator yoke, first and second coil seats (20a,21a) formed in the outer circumference of each stator yoke at its longitudinal center, and first and second coils (22,23) mounted in the first and second coil seats (20a,21a), respectively. The stator yokes are of unlike polarity. The hybrid stepping motor is easy and less costly to manufacture, and still offers excellent performance with high coil density.

## Description

The present invention relates to a stepping motor, and in particular, to improvements in the hybrid stepping motor which offer an efficient and low-cost design by simplifying coil winding and mounting and increasing coil density.

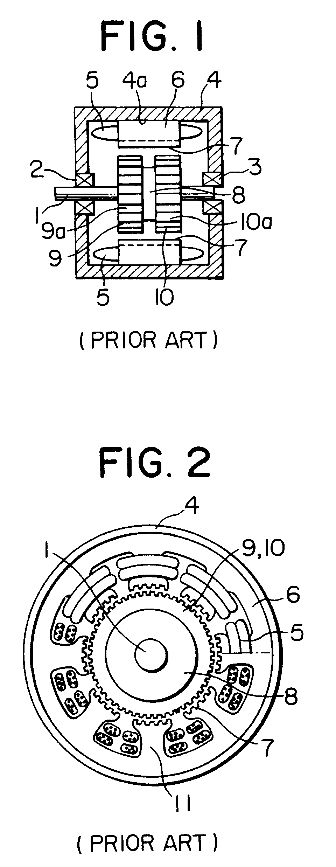

As FIGS. 1 and 2 show, a prior art hybrid stepping motor has a rotating shaft 1 that is rotatably supported by a pair of bearings 2, 3 at both ends of a stator casing 4. Disposed on the inner surface 4a of the stator casing 4 is a generally ring-shaped stator yoke 6 having a stator coil 5. Disposed on the inner surface of the stator yoke 6 are a plurality of poles 11 that are equally spaced around a circle, each pole 11 having a plurality of stator teeth 7. Integrally mounted on the rotating shaft 1 between the bearings 2, 3 are ring-shaped first and second rotor yokes 9, 10 with a magnet plate 8 therebetween. Each of the rotor yokes 9, 10 has a plurality of rotor teeth 9a, 10a respectively around its circumference, and the rotor yokes 9, 10 are of unlike polarities to each other. By feeding a drive pulse to the stator coil 5 via an unshown driving circuit, the rotor yokes 9, 10 are step-rotated.

The prior art hybrid motor thus constructed suffers the following problem.

In the above prior art hybrid stepping motor in which the magnet plate is sandwiched between the rotor yokes, the stator coil wound around each tooth of the stator yoke is disposed inside the casing. Thus, coil winding operation to each tooth is a difficult task, and further, increasing the density of coil turns is difficult.

The present invention has been developed to resolve the above inconveniences, and it is an object of the present invention to provide an efficient and low-cost hybrid stepping motor by simplifying coil winding and mounting and increasing the density of coil turns.

To achieve the above object, a stepping motor according to the present invention comprises a pair of bearings mutually spaced and mounted on a fixed shaft, a rotor case rotatably supported on the bearings, a ring-shaped rotor yoke disposed in the inner surface of the rotor case and having a plurality of rotor teeth, first and second stator yokes mounted on the fixed shaft with a magnet plate therebetween, a plurality of stator teeth formed on the outer circumference of each stator yoke, first and second coil seats formed in the outer circumference of each stator yoke at its longitudinal center, and first and second coils mounted in the first and second coil seats, respectively, whereby stator yokes are unlike in polarity.

Another motor according to the present invention comprises a pair of bearings disposed at both ends of a casing, a rotating shaft rotatably supported on each bearing, first and second ring-shaped stator yokes mounted with a ring-shaped magnet plate therebetween in the casing along the axial direction of the casing, a plurality of stator teeth formed on the inner surface of the each ring-shaped stator yoke, first and second coil seats formed in the inner circumference of each stator yoke at its longitudinal center, first and second coils mounted in the first and second coil seats, respectively, a rotor yoke mounted on the rotating shaft at the position corresponding to each stator yoke, and a plurality of rotor teeth formed on the outer circumference of each rotor yoke.

Another stepping motor according to the present invention comprises a pair of bearings mutually spaced and mounted on a fixed shaft, a rotor case rotatably supported on the bearings, a ring-shaped rotor yoke disposed in the inner surface of the rotor case and having a plurality of rotor teeth, a magnet cylinder disposed on the outer circumference of the fixed shaft, a pair of first and second ring-shaped stator yokes engaged with the outer circumference of the magnet cylinder, a plurality of stator teeth formed on the outer circumference of each ring-shaped stator yoke, first and second coil seats formed in the outer circumference of each stator yoke at its longitudinal center, and first and second coils mounted in the first and second coil seats, respectively, whereby the ring-shaped stator yokes are unlike in polarity.

FIG. 1 is a longitudinal cross-sectional view showing a prior art stepping motor.

FIG. 2 is a transverse cross-sectional view showing the prior art stepping motor.

FIG. 3 is a longitudinal cross-sectional view showing a hybrid outer-rotor stepping motor according to the present invention.

FIG. 4 is a transverse cross-sectional view showing the hybrid stepping motor of FIG. 3.

FIG. 5 illustrates magnetic flux formed by a magnet plate.

FIG. 6 illustrates magnetic flux formed by coils.

FIG. 7 illustrates combined magnetic flux of the magnet plate and the coils to which currents are fed, and step rotation motion of the rotor yokes.

FIG. 8 is a cross-sectional view showing another embodiment of the present invention.

FIG. 9 is a cross-sectional view showing another embodiment of the present invention.

FIG. 10 illustrates magnetic flux formed by the magnet plate of FIG. 7.

FIG. 11 illustrates magnetic flux formed by the coils of FIG. 7.

FIG. 12 illustrates combined magnetic flux of the magnet plate and the coils to which currents are fed, and step rotation motion of the rotor yokes.

Referring now to the drawings, the preferred embodiments of the present invention are discussed. Those components equivalent to those described with reference to the prior art are designated with the same reference numerals in the following discussion.

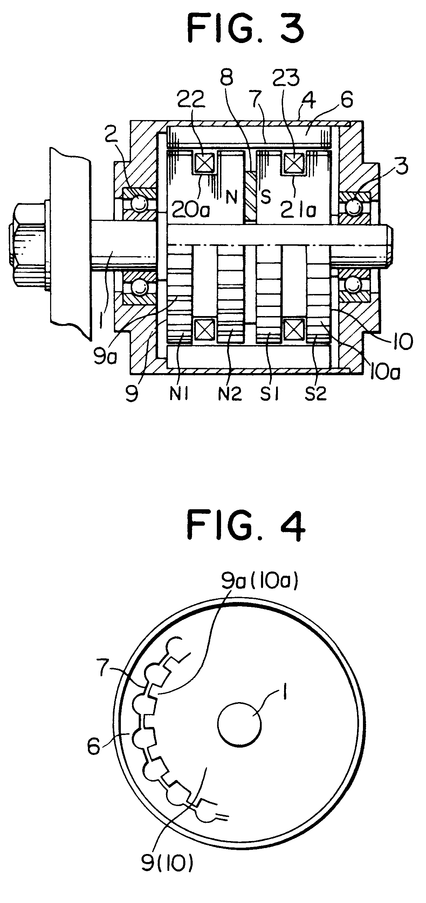

FIG. 3 shows a hybrid stepping motor of outer-rotor design. Designated 1 is a fixed shaft made of non-magnetic material. Supported on the fixed shaft 1 are a pair of bearings 2, 3 mutually spaced apart. The pair of bearings 2, 3 rotatably support a generally substantially cylindrical rotor case 4. Disposed in the inner surface of the rotor case 4 is a ring-shaped rotor yoke 6 having a plurality of rotor teeth 7.

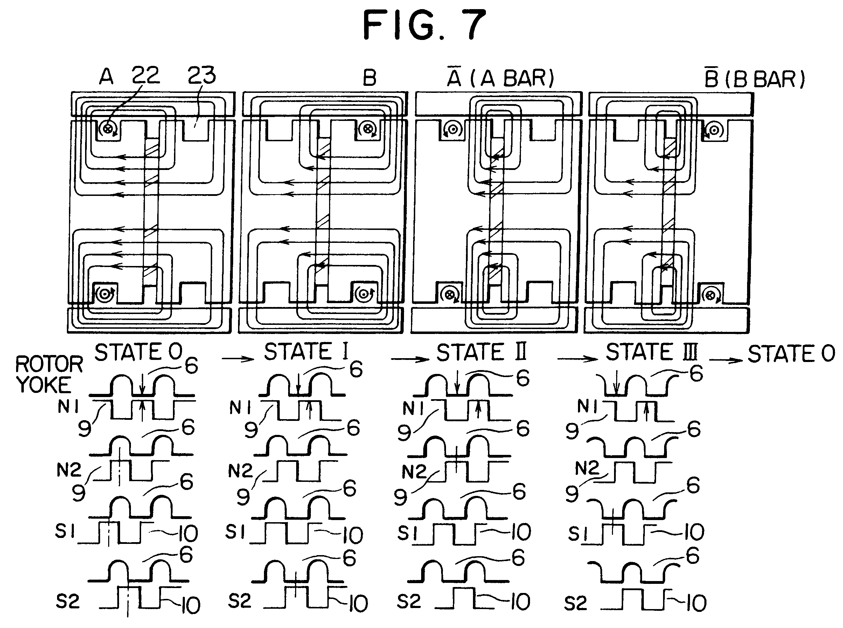

First and second ring-shaped stator yokes 9, 10 arranged on the fixed shaft 1 along the axial direction of the fixed shaft 1 with a magnet plate 8 therebetween. The first and second stator yokes 9, 10 with the magnet 8 therebetween are of unitary structure. The first and second yokes 9, 10 have respectively first and second coil seats 20a, 21a at their axially central position around their circumferences. The coil seats 20a, 21a have first and second coils 22, 23, each wound in a bobbin-like configuration therein (each of the coils 22, 23 is wound by a coil winding machine). The first stator yoke 9 has, on its outer circumference, first and second N-poles N1, N2 with the first coil 22 therebetween, and the second stator yoke 10 has, on its outer circumference, first and second S-poles, S1, S2 with the second coil 23 therebetween. Poles N1, N2, S1, and S2 respectively face the rotor teeth 7, and each of the poles N1, N2, S1, and S2 has a plurality of stator teeth 9a, 10a formed in the same pitch as the rotor teeth 7. As shown in the diagram in FIG. 7, both N-poles N1 and N2 have respective stator teeth 9a mutually 1/2 tooth off-aligned to each other, and S-poles S1 and S2 have respective stator teeth 10a mutually 1/2 tooth off-aligned to each other. A 1/4 tooth mis-alignment exists between stator teeth 9a on N-poles N1, N2 and stator teeth 10a on S-poles S1, S2, respectively.

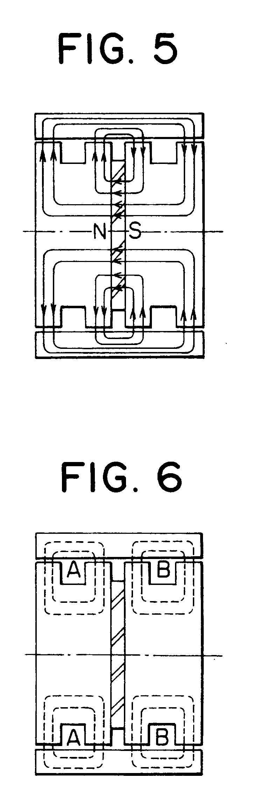

The operation of the stepping motor is now discussed. FIG. 5 shows magnetic flux formed by the magnet plate 8. FIG. 6 shows magnetic flux formed by the first and second coils 22, 23, wherein the direction of the magnetic flux depends on the direction of the current flowing through each of the coils 22, 23. In FIG. 7, when the unshown driving circuit allows currents to flow as shown in A direction through the first and second coils 22, 23 arranged with the magnet plate 8 therebetween, the rotor yoke 6 stays at a state 0 due to the known magnetic effect. Then, when currents flow through as shown in B direction, the rotor yoke 6 rotates from the state 0 to a state I. Next, when the driving circuit causes currents to flow through the coils 22, 23 in A bar and then B bar directions, the rotor yoke 6 rotates to state II and then to state III. When currents are allowed to flow as shown in the direction A again, the rotor yoke 6 then returns to the state 0. The motor thus has rotated by one pitch of the rotor teeth 7.

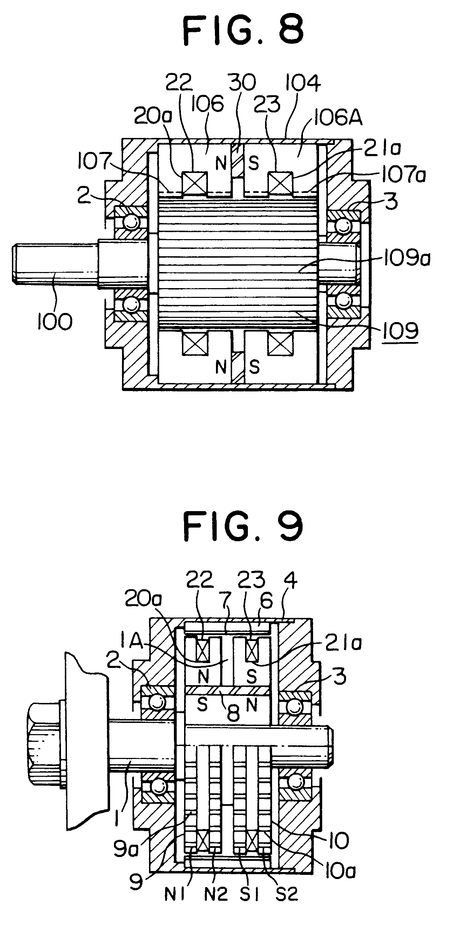

FIG. 8 shows a hybrid stepping motor of inner-rotor design, in which the present invention is applied to the prior art hybrid stepping motor of inner rotor design of FIGS. 1 and 2. Disposed on the inner surface of a non-magnetic stator case 104 are a pair of ring-shaped first and second stator yokes 106, 106A with a ring-shaped magnet plate 30 therebetween in a unitary structure along the axial direction of the case 104. The stator yokes 106, 106A are unlike in polarity. The stator yokes 106, 106A are provided with coil seats 20a, 21a respectively, in which first and second bobbin configured coils 22, 23 are respectively mounted. Disposed on a rotating shaft 100 of magnetic material is a rotor yoke 109 that faces the already described stator yokes 106, 106A. The rotor yoke 109 has, on its outer circumference, a plurality of rotor teeth 109a. The motor in FIG. 8 has an inner-rotor design, which is opposite of the design of FIG. 3. However, the principle that works in step rotation described in FIGS. 5 through 7 equally applies to the stepping motor in FIG. 8. The above discussion has been made on the assumption that the coils 22, 23 are wound based on the known bi-polar winding. The same advantage will result if the known uni-polar winding is used. Furthermore, the above discussion has assumed a single-phase excitation. A two-phase excitation or a single-phase/two-phase excitation will also work. As the prior art hybrid stepping motor operates in micro-step driving or sin/cos driving, the hybrid motor of this invention equally operates in micro-step driving or sin/cos driving. Off-tooth alignment between teeth 7, 9a, 10a, 107, and 109a is relative, and the same advantage will be achieved even if any tooth side is off-tooth aligned.

Referring to FIGS. 9 through 10, other embodiments of the present invention are discussed. Those components equivalent to those described with reference to the preceding embodiments are designated with the same reference numerals.

Designated 1 in FIG. 9 is a fixed shaft 1 on which a pair of mutually spaced bearings 2, 3 are fixed. A generally substantially cylindrical rotor case 4 is supported by the pair of bearings 2, 3. Disposed on the inner surface of the rotor case 4 are a ring-shaped rotor yoke 6 having a plurality of rotor teeth 7.

A magnet cylinder 8 disposed on the circumference of the fixed shaft 1 has first and second ring-shaped stator yokes 9, 10 with a gap 1A therebetween arranged along the fixed shaft. The magnet cylinder 8 and the stator yokes 9, 10 on it form a unitary structure.

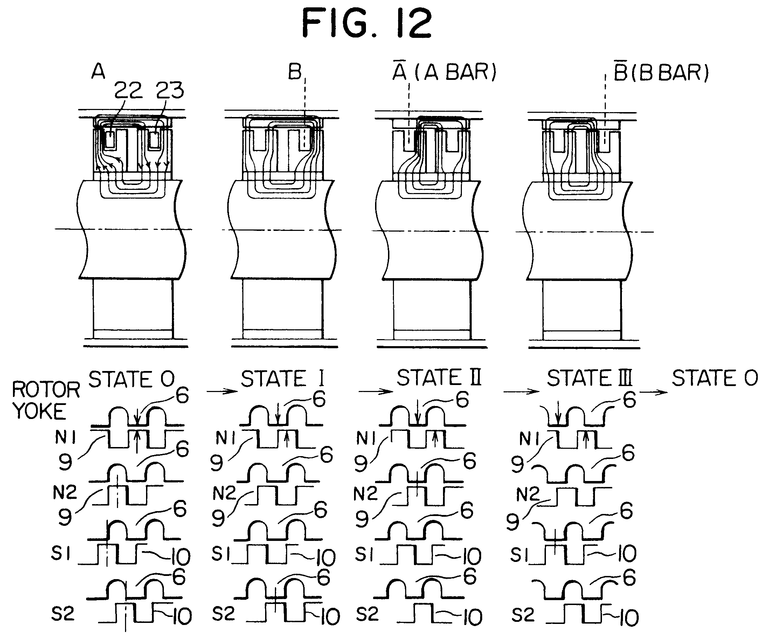

The stator yokes 9, 10 are provided with first and second coil seats 20a, 21a on their longitudinally central positions around their circumferences. The first and second coil seats 20a, 21a have, respectively, first and second bobbin-like wound coils 22, 23 that may be automatically wound by a coil winding machine. The first ring-shaped stator yoke 9 has, on its outer circumference, first and second N-poles N1, N2 with the first coil 22 therebetween, and the second ring-shaped stator yoke 10 has, on its outer circumference, first and second S-poles, S1, S2 with the second coil 23 therebetween. Poles N1, N2, S1, and S2 respectively face the rotor teeth 7, and each of the poles N1, N2, S1, and S2 has a plurality of stator teeth 9a, 10a formed in the same pitch as the rotor teeth 7. As shown in the diagram in FIG. 12, both N-poles N1 and N2 have respective stator teeth 9a mutually 1/2 tooth off-aligned to each other, and S-poles S1 and S2 have respective stator teeth 10a mutually 1/2 tooth off-aligned to each other. A 1/4 tooth mis-alignment exists between stator teeth 9a on N-poles N1, N2 and stator teeth 10a on S-poles S1, S2, respectively.

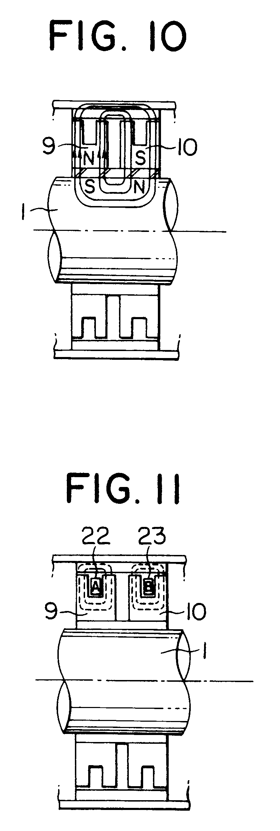

The operation of the stepping motor is now discussed. FIG. 10 shows magnetic flux formed by the magnet cylinder 8. FIG. 11 shows magnetic flux formed by the first and second coils 22, 23, wherein the direction of the magnetic flux depends on the direction of the current flowing through each of the coils 22, 23. In FIG. 12, when the unshown driving circuit allows currents to flow as shown in A direction through the first and second coils 22, 23 arranged on the magnet cylinder 8, the rotor yoke 6 stays at a state 0 due to the known magnetic effect. Then, when currents flow through as shown in B direction, the rotor yoke 6 rotates from the state 0 to a state I. Next, when the driving circuit causes currents to flow through the coils 22, 23 in A bar and then B bar directions, the rotor yoke 6 rotates to state II and then to state III. When currents are allowed to flow as shown in the direction A again, the rotor yoke 6 then returns to the state 0. The motor thus has rotated by one pitch of the rotor teeth 7.

According to the present invention, the hybrid stepping motor of outer-rotor design thus constructed offers the following advantages: since the coils are mounted on the circumference of the stator yokes in the structure in FIG. 3, coil winding operation is very easy, causing the manufacturing cost involved to be substantially reduced; and the coils are simply wound in a bobbin-like fashion, increasing greatly the mounting density of coil turns or coil volume ratio and thereby enhancing substantially performance of the stepping motor.

## Claims

1. A stepping motor comprising a pair of bearings mutually spaced and mounted on a fixed shaft, a rotor case rotatably supported on the bearings, a ring-shaped rotor yoke disposed on the inner surface of the rotor case and having a plurality of rotor teeth, first and second stator yokes with a magnet plate therebetween mounted on the fixed shaft, a plurality of stator teeth formed on the outer circumference of each stator yoke, first and second coil seats formed around the outer circumferences of the first and second stator yokes, respectively, and first and second coils mounted in the first and second coil seats, respectively, whereby the stator yokes are unlike in polarity.

2. A stepping motor comprising a pair of bearings disposed at both ends of a casing, a shaft rotatably supported on the bearing, first and second ring-shaped stator yokes mounted with a ring-shaped magnet plate therebetween in the casing along the axial direction of the casing, a plurality of stator teeth formed on the inner surface of each ring-shaped stator yoke, first and second coil seats formed around the inner circumferences of the first and second stator yokes, respectively, first and second coils mounted in the first and second coil seats, respectively, a rotor yoke mounted on the rotating shaft at the position corresponding to the stator yokes, and a plurality of rotor teeth formed on the outer circumference of each rotor yoke.

3. A stepping motor comprising a pair of bearings mutually spaced and mounted on a fixed shaft, a rotor case rotatably supported on the bearings, a ring-shaped rotor yoke disposed on the inner surface of the rotor case and having a plurality of rotor teeth, a magnet cylinder disposed on the outer circumference of the fixed shaft, a pair of first and second ring-shaped stator yokes engaged with the outer circumference of the magnet cylinder, a plurality of stator teeth formed on the outer circumference of each ring-shaped stator yoke, first and second coil seats formed around the inner circumferences of the first and second stator yokes, respectively, and first and second coils mounted in the first and second coil seats, respectively, whereby the ring-shaped stator yokes are unlike in polarity.

4. A stepping motor according to claim 1, wherein a gap is provided between the stator yokes.
